(19) Europäisches Patentamt
European Patent Office
Office européen des brevets

(11) Publication number: **0 273 722 B1**

(12) **EUROPEAN PATENT SPECIFICATION**

(45) Date of publication of patent specification: **14.10.92**

(51) Int. Cl.[5]: **G01V 1/40**, G01V 1/36

(21) Application number: **87311409.4**

(22) Date of filing: **23.12.87**

Divisional application 92106130.5 filed on 23/12/87.

(54) **Signal processing to enable utilization of a rig reference sensor with a drill bit seismic source.**

(30) Priority: **30.12.86 US 947735**

(43) Date of publication of application:
**06.07.88 Bulletin 88/27**

(45) Publication of the grant of the patent:
**14.10.92 Bulletin 92/42**

(84) Designated Contracting States:
**DE FR GB IT NL**

(56) References cited:
**WO-A-85/05696**
**WO-A-88/04435**

**51st ANNUAL MEETING OF SEG - TECHNICAL PAPER, no. 55.2, pages 1915-1949; K.D. WYATT et al.: "The determination of subsurface structural information using the vertical seismic profile"**

(73) Proprietor: **GAS RESEARCH INSTITUTE**
**8600 West Bryn Mawr Avenue**
**Chicago Illinois 60631(US)**

(72) Inventor: **Rector, James**
**350 Sharon Park Drive**
**Menlo Park California 94025(US)**
Inventor: **Marion, Bruce**
**1944 San Ramon Avenue**
**Mountian View California 94043(US)**
Inventor: **Widrow, Bernard**
**860 Lathrop Drive**
**Stanford California 94305(US)**
Inventor: **Salehi, Iraj A.**
**7 S. 671st Route 53**
**Naperville Illinois 60540(US)**

(74) Representative: **Bayliss, Geoffrey Cyril et al**
**BOULT, WADE & TENNANT 27 Furnival Street**
**London EC4A 1PO(GB)**

EP 0 273 722 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns an apparatus and method by which the random acoustic vibrations emanated by a drill bit while drilling can be used to create seismic images of the subsurface in a region in the vicinity of the borehole. More particularly, it relates to such an apparatus and method in which sensors are positioned to provide more complete information on subterranean geologic formations. Most especially, it relates to such an apparatus and method in which improved reference signals and improved signal processing techniques are available.

Conventional reflection seismology utilizes surface sources and receivers to detect reflections from subsurface acoustic impedance contrasts. The obtained image often suffers in spatial accuracy, resolution and coherence due to the long travel paths between source, reflector and receiver. It is well known to seismologists that the recorded signal amplitude at the receiver, A(r), is related to the input signal amplitude, $A_o$, through the travel-path by:

$$A(r) = \frac{A_o}{r} e^{-\alpha r}$$

where

$\alpha$ = The absorption coefficient of the earth along the travel-path

r = The travel path length

Longer travel paths have lower recorded amplitudes.

A technique commonly known as Vertical Seismic Profiling (VSP) records seismic data to image the subsurface in the vicinity of the borehole. With VSP a source(s) is activated at the surface and a sensor(s) is suspended at a discrete borehole depth with a wireline. Data is recorded and the process repeated for several borehole depths. Acquiring VSP data is highly impractical if multiple surface source locations are desired. Each new source is costly to apply and adds to the acquisition time as well as the rig inactivity period. A Vertical Seismic Profile is therefore prohibitively expensive to implement when many source positions are used.

With a downhole source, the VSP geometry is inverted. Source locations become receiver locations and vice versa. A downhole source overcomes the logistical limitations inherent in using multiple surface sources for Vertical Seismic Profiling. Data can be acquired simultaneously at many sensor locations proximal to the Earth's surface with little more expense than a single location.

One of the earliest patents concerning downhole sources is Weatherby, U.S. 2,062,151, issued November 24, 1936, which uses the drill bit as an impulse generator of seismic waves. Drilling is done with a cable tool, which is dropped on the hole bottom. This creates seismic impulses. Bit location and wave velocity can be obtained using these impulses. Drill bit generated direct wave arrival time differences between two non coincidental geophone locations are used to determine rock acoustic velocity. The Widrow U.S. patents 4,363,112 and 4,365,322, issued December 7 and December 21, 1982, use the continuous, natural, random vibrations of a rotary drill bit to launch seismic waves into the earth. Spectral amplitudes and interference patterns are used to image subsurface reflectors.

There are a number of previous patents concerned with the use of seismic downhole sources other than the drill bit. All of these patents make use of an artificial transducer situated at a given depth in the borehole. Broding et al., U.S. Patent 3,909,776, issued September 1975 and Farr and Ward, U.S. Patent 3,881,168, issued April 1975, use a fluid driven oscillator (as described by Galle in U.S. Patents 3,520,362, 3,730,269, 3,860,902) to emit seismic waves into the earth from a position within a wellbore. Farr and Ward require that the seismic source be monofrequency. Phase delays between a geophone located on the surface near the well and another located near the top of the well are used to produce a log of travel-time and compressional wave velocity as a function of depth. Broding et al. use a fluid driven oscillator which changes emitted frequency as a function of time, much like a Vibroseis source, as described in U.S. Patent 2,688,124. The repeatable pattern of the oscillator can then be used as a signal to cross-correlate with received geophone signals. Arrival times of events as determined by peaks in the cross-correlations can then be used to seismically image the subsurface.

The patent literature describes other types of downhole seismic sources which emit pulses into the subsurface. For example, Klaveness, U.S. Patent 4,207,619, issued June 10, 1980, uses a pulse generator located in the drillstring just above the drill bit. The source is activated and the arrival time measured at the earth's surface and at the top of the drillstring on the swivel. The swivel location is used as a "zero point" sensor from which pulse arrival time differences can be measured. Arrival times are calculated from visual inspection of time-domain signals received by the geophones.

WO-A-85 05696 discloses a method for instantaneous acoustical logging in a bore well comprising the steps of marking both on a rod and

ground elementary records corresponding to the same elevation of a drilling tool the grouping pairs of said elementary records and intercorrelating said records of pairs so as to produce, for each pair, a correlated signal representative of the acoustical energy created and of the travel time difference of the waves received by sensors from which the pair of records has been obtained.

WO-A-88 04435 (Under Art. 54 (3 and 4) EPC discloses an apparatus for drilling in the earth with a drill bit and, whilst doing so, determining the positions of seismic wave reflecting geologic formations using seismic wave sensors positioned in the earth near its surface. The sensors are disposed at known positions with respect to the bore hole. The drill bit generates the seismic waves and the sensors receive the seismic waves both directly and by reflection from the geologic formations. Adaptive filters are connected to each of the sensors and a summing circuit receives outputs from the adaptive filters. The converged impulse responses of the adaptive filters provide information about the amplitude of the reflective waves and their arrival times at the surface, thus allowing detection of the reflecting horizons and their location and physical characteristics.

This invention provides an apparatus for providing while drilling information on a subterranean geologic formation, which comprises a drilling rig, a rotary drill bit attached to said drilling rig for providing seismic waves as it drills in the earth, at least one seismic wave sensor spaced from said rotary drill bit in the earth for receiving both direct seismic wave paths and seismic wave paths reflected from the subterranean geologic formation the seismic waves provided by said drill bit, a reference sensor located on or proximate to said drilling rig, and means to receive the reference signal from said reference sensor and the drill bit generated signals from said at least one seismic wave sensor to distinguish the drill bit generated signals from interference signals by cross-correlating the reference and seismic wave sensor signals, characterised in that means are provided to receive the reference signals for deconvolving the reference signals.

In a preferred form, the apparatus has a means connected to receive the reference signals either prior to or subsequent to their cross correlation for reference deconvolution or whitening. A means is connected to receive the cross-correlated reference and seismic wave sensor signals for eliminating rig generated energy from the reference signals. A means is connected to receive the cross correlated reference and seismic wave sensor signals from the rig generated energy eliminating means for separating the seismic wave sensor signals into a first group of the seismic wave sensor signals representing the drill bit generated seismic waves received by the at least one seismic wave sensor in the direct seismic wave paths, and a second group of the seismic wave sensor signals representing the drill bit generated seismic waves received by the at least one seismic wave sensor in the seismic wave paths reflected by the subterranean geologic formation.

The invention also provides a method for providing information on a subterranean geologic formation, which comprises providing seismic waves with a rotary drilling bit while drilling in the earth with the rotary drilling bit, receiving in direct seismic wave paths and seismic wave paths reflected from the subterranean geologic formation the seismic waves provided by the drill bit at a location in the earth spaced from the rotary drilling bit, receiving the seismic waves proximate to a drilling rig connected to the rotary drilling bit, cross-correlating the seismic signals sensed proximate to the drilling rig and spaced from the drilling rig to separate the drill bit generated signals from interference signals by combining the reference signals and the signals received spaced from the drilling rig, and separating the cross-correlated reference signals and the signals received spaced from the drilling rig into a first group of the drill bit generated seismic signals travelling to the at least one location spaced from the drilling rig in direct paths and a second group of the drill bit generated seismic signals travelling to the at least one location spaced from the drilling rig in paths reflected from the subterranean geologic formation; characterised in that the method includes the step of deconvolving the reference signals.

Our apparatus and method is significantly different from the above prior art techniques. Like Weatherby and Widrow, we use the drill bit as a generator of seismic waves. However, we employ very different acquisition and processing techniques to exploit the drill bit generated seismic energy. Techniques such as acquiring the seismic data simultaneously at a reference location on the drill rig as well as with geophones located in the earth, cross-correlation of the rig reference sensor signal with received geophone signals and associated processing such as deconvolution of the rig reference signal and attenuation of rig generated interference improve over the Weatherby and Widrow techniques.

All of the prior art using downhole sources do not use the drill bit signal to seismically image the subsurface. They all require that an artificial transducer be located in the borehole. Some such as Farr and Ward, and Klaveness, use signals from a sensor located at the top of the drill pipe to aid in processing and interpreting the data. Broding et al. do not use a sensor located at the top of the drill pipe but do make use of cross-correlation techniques to determine arrival times of events. None of this prior art uses the cross-correlation function between a rig sensor signal and geophone signals to measure arrival times of events originating from the drill bit. None of the prior art teaches means of separating reflected drill bit energy from directly traveling drill bit energy and rig generated interference.

Drill bit generated seismic energy travels into the earth and to geophone locations on the earth's surface via many different travel paths. Some of the major travel paths are illustrated in Figure 1. In addition to direct and reflected paths, drill bit generated energy also travels up the drillstring to the drill rig. Some of this energy continues from the drill rig into the earth and travels to the geophones, introducing coherent interference. By cross-correlating the signal from a rig mounted reference sensor with signals from geophones located some distance from the borehole in the earth, relative arrival times of events between signals from the rig sensor and the geophones can be measured.

The rig reference signal causes complications in the cross-correlated data not encountered when using conventional seismic sources. The rig reference signal has a highly colored spectrum and contains multiple sources of noise from the rig's drilling machinery. The rig reference signal is further complicated by multipath and losses in the drillstring. These problems are solved by the methods taught herein. Deconvolution can be used to whiten the spectrum of the rig reference signal and reduce multipath effects and losses in the drillstring. In addition, coherent interference radiated by the drill rig can be attenuated through spatial filtering.

Using drilling data recorded from one or a number of field sensors, and having made these recordings at many drilling depths, methods are shown to create two and three dimensional seismic images. These methods include wavefield separation and Common Reflection Point transformation and analysis.

The drill bit downhole source holds several advantages over proposed and existing downhole sources. All downhole seismic sources are special transducers used to generate seismic waves. Such sources require that the rig remain idle for the period of time when they are activated. Their use poses risk to the borehole and causes loss of rig time. They are expensive and unreliable devices. In contrast, the drill bit source is passive, utilizing natural acoustic emanations of the drill bit while drilling. Use of the drill bit is non-invasive, having no effect on the drilling process and introducing no additional risk to the borehole. Moreover, imaging with the drill bit source is a measure-while-drill (MWD) technique. The information provided by a survey based on this technique in real time may have a significant impact on various drilling related decisions. For example, it is often desirable to determine the location of specific geologic horizons relative to the drill bit depth in order to optimize drilling parameters. If an overpressured zone were expected, accurate knowledge of depths at which formation over-pressuring occurred would facilitate amendments to a drilling fluids program and reduce blow out risk. Conventional VSP methods of overpressure identification require that drilling be stopped to conduct the survey.

The subsurface seismic images constructed while drilling may also aid the explorationist in determining whether and/or when the target horizons will be penetrated if the drilling plan is followed and whether the plan needs updating.

This invention teaches how to record and isolate the drill bit generated direct and reflected seismic energy traveling in the earth from the seismic energy recorded at locations on and in the vicinity of the drill rig. The drill bit generated direct and reflected energy can then be used to obtain subsurface seismic images in the vicinity of the borehole.

The following is a detailed description of some embodiments of the invention, taken together with the drawings, in which:

Figure 1 is a schematic representation of an apparatus in accordance with the invention.

Figure 2 is a flow chart of a process in accordance with the invention.

Figures 3A and 3B are waveform diagrams of signals obtained using the apparatus of Figure 1.

Figure 4 is another waveform diagram of further signals obtained using the apparatus of Figure 1.

Figures 5A and 5B are additional waveform diagrams obtained after further signal processing of the signals shown in Figure 3A.

Figure 6 is a schematic representation useful for understanding further operation of the apparatus of Figure 1.

Figure 7 is a set of signal waveforms illustrating the operation of the apparatus of Figure 1 explained in connection with Figure 6.

Turning now to the drawings, more particularly to Figure 1, there is shown a seismic signal generation and analysis apparatus 10 in accordance with the invention. The apparatus 10 includes a drilling rig 12, a drillstring 14 extending into earth 16 from the drilling rig 12, and a drill bit 18 at the end of the drillstring 14. A group of geophone seismic sensing elements, generally indicated at 20, is provided in the earth 16, near its surface 22. A reference geophone seismic sensing element 24 is mounted on the drilling rig 12, such as above the

kelly.

In operation of the apparatus 10, the drill bit 18 generates seismic waves while drilling a borehole, as is explained more fully in the above-referenced Widrow patents. These seismic waves are propagated through the earth 16 to the seismic sensing elements 20 both directly, as indicated at 26, and by reflection from one or more subterranean geologic formations 28, as indicated at 30. The seismic waves are further propagated along the drillstring 14 to the reference sensing element 24 on the drilling rig 12. Interference signals are generated by the drilling rig 12, and are also propagated to the seismic sensing elements 20, as indicated at 32, and also to the reference sensing element 24.

The resulting seismic energy is recorded by the reference vibration sensor 24 located on the drill rig and simultaneously at the field sensors (geophones) 20 located in the earth 16 at selected distances from the borehole. The seismic energy consists not only of energy emanated by the drill bit 18, but also other components of the drilling apparatus such as diesel engines, compressors, etc. The sound recorded by field sensors 20 contains not only the signals associated with drilling, but also components which may be unrelated to drilling. The latter include any cultural noise such as vehicles, people, animals, weather (wind and rain), etc. The vibrational energy recorded by the sensor 24 on the swivel or on the drill rig is used as a reference signal with which to cross-correlate the geophone outputs. Cross-correlation, as described by Doty in U.S. Patent No. 2,688,124, provides means by which arrival times of energy which is coherent between the reference signal and the geophone outputs can be measured. Energy which is incoherent is not sensed at both reference and field locations and is attenuated in the cross-correlation process.

Our method utilizes a downhole seismic source, acoustic energy generated by the drill bit 18 while drilling, and traveling through the earth 16 via direct and reflected paths 26 and 30 to seismically image the subsurface near the borehole. Seismic data is recorded while a well is being drilled using sensors 20 in the earth in the vicinity of the borehole and on the drill rig 12.

The drill bit signal is an uncontrolled random process. The reference on the drill bit 18 source is obtained remotely by exploiting the vibration from the drill bit 18 arriving at the surface via the drillstring 14. Specialized signal processing as outlined below is used to effectively represent the cross-correlated data as if the source spectrum were controlled and the sensor recording the reference signal were located proximal to the drill bit.

Our method holds several advantages over surface reflection seismology. With our method, the travel-path to a reflector 28 is reduced by as much as a factor of 2 from surface reflection seismic paths. It has also been observed that the near surface acts as a strong attenuator of seismic energy, particularly at frequencies above 50 Hz. Using the drill bit 18 signal, the effects of the near surface are halved. Drill bit generated seismic energy arrives via direct as well as reflected travel-paths 26 and 30. Direct arrivals are stronger than reflections and hence can be expected to exhibit a higher signal to noise ratio.

Our method, using the drill bit 18 as a downhole source, overcomes the logistical limitations inherent in using multiple surface sources for Vertical Seismic Profiling. Our data can be acquired simultaneously at many field sensor 20 locations with little more expense than at a single surface location.

Figure 2 is a flow chart showing how the reference signals 25 generated at the drill rig 12 and the field geophone signals 27 are processed to practice the method of this invention. The reference signals are deconvolved at 29 to whiten them. The deconvolved reference signal is cross-correlated with the field geophone signal 27 at 31. As part of the cross-correlation, the signal 25 is time shifted, as indicated at 33. These steps are repeated for a series of drilling depths, as indicated at 34. The time shifting could occur at any point in the signal processing. The output of the cross-correlation 31 at 35 is a single signal with elements of both input signals 25 and 27. This process is repeated for selected drilling depths. The signals are then sorted according to ascending drilling depths at 36. Rig generated energy is removed from the signal 35 at 37. The signal containing mixed direct and reflected drill bit generated seismic components is then separated at 39 to give the drill bit generated direct arrival component at 41 and the drill bit generated reflected component at 43. Analysis of these two signal components characterizes the subterranean geologic formation from which the component 43 was reflected. The direct arrival component 41 is used at 44 to determine propagation velocity. The direct arrival component 41 is used at 46 to calculate or derive a deconvolution operator. The deconvolution operator 46 is used at 48 to deconvolve the drill bit generated reflected component 43. The deconvolved drill bit generated reflected component is then used at 50 for common reflection point imaging.

## REFERENCE DECONVOLUTION

Seismic vibrations from the drill bit 18 are mechanically transmitted through the drill collars and through the drill pipe to the top of the kelly and into the swivel. Hence, the reference signal recorded on the rig 12 at the top of the drillstring corresponds to the bit generated signal modified by the transfer function between the bit 18 and the reference 24. Both coherent noise generated by the drilling machinery and random noise are present at the reference 24. In Z-transform notation:

Ref(Z) = Bit(Z)T(Z) + N(Z)

Where:
Ref(Z) is the Z transform of the signal recorded at the reference 24;
Bit(Z) is the Z transform of signal generated by the drill bit 18;
T(Z) is the transfer function between the drill bit 18 and the reference 24;
N(Z) is the Z transform of noise, both coherent and random, sensed at the reference 24.

The cross-correlation of the swivel reference 24 signal with a field sensor 20 signal, XCOR(Z), can be represented as

XCOR(Z) = Ref(1/Z)Geo(Z)

Where:
Ref(1/Z) is the Z transform of the signal recorded at the reference 24 reversed in time;
Geo(z) is the Z transform of the geophone 20 output.

To achieve the type of broadband source spectrum that is commonly employed in reflection seismology it may be necessary to whiten the spectrum of the reference signal. This can be accomplished by deriving a whitening filter based on the reference 24 signal, and convolving that filter response with the correlations. The filter response can also be applied prior to cross-correlation with the same effect. The whitening filter derived is an approximation to the inverse of the reference signal 24 reversed in time. This inverse can be found by any number of deconvolution techniques employed in seismic signal processing such as predictive, maximum likelihood, minimum entropy, or spectral factorization, as respectively disclosed in:

Peackock, K.L. and Treitel, S., PREDICTIVE DECONVOLUTION, THEORY AND PRACTICE: Geoph. v. 34, pp. 155-169
Mendel, J.P., SINGLE CHANNEL WHITE NOISE ESTIMATORS FOR DECONVOLUTION: Geoph., v.43, pp 1-22
Bayless, J.W. and Bingam, J.O., APPLICATION OF THE KALMAN FILTER, Geoph., v. 35, pp. 2-23
Ulrych, T.J., APPLICATION OF HOMOMORPHIC DECONVOLUTION TO SEISMOLOGY, Geoph. v. 36, pp. 650-661.

In Z transforms

Step 1: Find 1/Ref(1/Z)

Step 2: Multiply XCOR(Z) by 1/Ref(1/Z) 1/Ref(1/Z)XCOR(Z) = 1/Ref(1/Z)Ref(1/Z)Geo(Z) = Geo(Z)

The effects of reference deconvolution on the cross-correlation are shown in Figures 3A and 3B. Reference deconvolution causes the wavelet 70 to appear sharper. Spatial and temporal resolution are improved with a sharper wavelet. Reference deconvolution also attenuates multipath in the reference signal 72.

## SPATIAL FILTERING OF RIG GENERATED ENERGY

Since drill bit generated vibrations are picked up on the drill rig, it is not surprising that this vibration travels from the drill rig into the earth. Thus, the drill rig 12 acts as a secondary radiator of seismic energy originally radiated at the drill bit. As Figure 4 shows, drill bit generated direct and reflected signals 74 and 76 exhibit cross-correlation delay time variation (commonly referred to as "moveout") with drilling depth. In Figure 4 a series of cross-correlation functions between the rig reference channel 78 and a selected geophone channel are plotted for various selected drill bit 18 depths. As the drill bit 18 goes deeper, the travel-time along the direct ray 74 increases. Conversely, as the drill bit goes deeper, the travel-time along the raypath 76 reflected from a given horizon decreases. The changes in the respective arrival times creates visible moveouts which are evident in the Figure. In contrast to these arrivals is the interference 78 from the drill rig. It is coherent with the useful primary energy, but does not exhibit cross-correlation moveout with drilling depth.

The moveout differences between rig interference 78 and bit generated direct and reflected arrivals 74 and 76 are exploited to attenuate any energy generated by the drill rig 12. Zero moveout energy is equivalent to zero spatial frequency (k = 0). A spatial filter designed to attenuate very low spatial frequency data while passing those events with non-zero moveout will attenuate rig generated signals 78 while passing, unharmed, bit generated direct and reflected arrivals 74 and 76. The filtering can be accomplished by any number of spatial filtering techniques, some of which are as follows.

One technique transforms cross-correlated signals from a given geophone group and from a series of drilling depths to the domain of "frequency-wavenumber", or f-k, with a two-dimensional Fourier transform. Different events can then be separated on the basis of apparent velocity Va, which is a slope in the f-k domains

Va = f/k.

The filter is designed by specifiying slopes as bounds on the passed or rejected regions of the f-k domain. Energy within the passed region is given a high weighting coefficient, while energy within the rejected region is given a low weighting coefficient. Edge effects of the filter can be minimized by smoothly interpolating the weighting coefficients between the passed and rejected regions of the f-k domain. The filtering can be performed as a multiplication in the f-k domain or as a convolution in the untransformed domain.

Another technique for selectively attenuating or enhancing different types of arrivals begins by time shifting the desired event so that it has zero moveout. In the special case of rig generated energy, no time shifting need be done. Filtering is accomplished as follows. First, the arrival aligned to zero moveout is enhanced by averaging a series of cross-correlations together. This averaging can be done using the mean or the median statistic. The spatial bandwidth of the filter is controlled by the number of cross-correlations averaged. More averaging is equivalent to a tighter filter: The output average is the enhanced version of the aligned zero moveout event. If this is the only goal, the data can now be de-aligned (if necessary). The zero moveout event can be attenuated by subtracting this average from the original data, followed by dealignment.

Further details on these and other spatial filtering techniques are disclosed in the following references:

Embree, P., Burg, J.P., Backus, M.M., WIDE-BAND VELOCITY FILTERING THE PIE-SLICE PROCESS, Geoph., v. 28, pp. 948-974

Treitel, S., Shanks, J.L., Francis, C.W., SOME ASPECTS OF FAN FILTERING, Geoph., v. 32, pp. 789-800

Sengbush, R.L., Foster, M.R., OPTIMUM MULTICHANNEL VELOCITY FILTERS, Geoph., v. 33, pp. 11-35.

Hildebrand, L., TWO REPRESENTATIONS OF THE FAN FILTER, Geoph., v. 47, pp. 957-959.

That portion of rig generated energy that travels in the near surface may also be attenuated by spatial filters that take advantage of the moveout differences between deep events and those that travel in the near surface. The apparent velocity, $V_a$, of an event across a straight line array is well known to be related to the intrinsic earth velocity and arrival angle by

$$V_a = V_{intrinsic}/\cos\theta$$

where $\theta$ is measured with respect to the horizontal. Deep arrivals from the drill bit will generally exhibit higher apparent velocities than near surface traveling paths. By implementing arrays which attenuate low apparent velocity energy, near surface traveling interference from the drill rig can often be attenuated. The filter can be implemented in the field, in the form of a geophone string containing a number of geophones each spaced selected distances apart, or later by mixing cross-correlations from several offsets in the computer.

## ACCOUNTING FOR DRILLSTRING DELAY

To properly represent the cross-correlated data as if a reference proximal to the drill bit were used, the data must be time shifted. Cross-correlated signals using a reference sensor 24 on drill bit generated energy located at the top of the drillstring 14 are time advanced relative to a reference located at the drill bit. This advance is equal to the travel-time of waves from the drill bit 18 up the drillstring 14 to the top of the drillstring on the drill rig 12. With knowledge of acoustic velocity in the steel pipe drillstring and with knowledge of the drillstring length, the travel-time can be determined. The cross-correlated data is then time shifted to position events as if the reference signal on drill bit generated energy were located at the drill bit 18 itself. Alternatively, the reference signal can be time-shifted prior to cross-correlation.

## EXPLOITATION OF DRILL BIT GENERATED DIRECT AND REFLECTED SIGNAL

The aforementioned processing was aimed at arriving at the equivalent of a controlled downhole seismic source, either impulsive or Vibroseis-like. The input to this processing were signals from the drilling sound as sensed at the surface on the drill rig and in the earth in the vicinity of the drill rig. With a broadband downhole seismic source, direct and reflected signals 74 and 76 can be utilized to obtain seismic information about the subsurface in the vicinity of the borehole using some of the following methods.

## WAVEFIELD SEPARATION

In exploiting the drill bit generated signal it is necessary to separate the data into two subsets: one containing the direct arrival signal 74, the other containing the portion 76 of the signal coming from reflections beneath the drill bit depth. This process is known as wavefield separation. The processing of VSP data uses wavefield separation to separate "upgoing" (reflections) and "downgoing" (direct arrivals) signals, as disclosed by Hardage, B., VSP PRINCIPLES, Geophy. Press, pp. 173-194. With a downhole source the terms "upgoing" and

"downgoing" must be reversed. In this application we have used the terms direct and reflected arrivals to avoid confusion.

As Figure 4 shows, drill bit generated direct and reflected signals 74 and 76 can be distinguished in the cross-correlation functions from a single channel based on its arrival time moveout with drill bit depth. Wavefield separation processing exploits moveout differences to separate the data set into the direct arrival signal 74 and reflected arrival signal 76. Spatial filters are used to pass or reject different moveouts. For example, a filter which passed positive moveouts (cross-correlation arrival times which increased with drill bit depth) would enhance the direct arrival 74 while attenuating signals 76 from reflecting layers which have negative moveout. Conversely, a second filter passing negative moveouts and rejecting positive moveouts would enhance reflected signals 76 while attenuating the direct arrival signal 74. Alternatively, the direct arrival 74 can be enhanced by passing a range of positive moveouts. The enhanced direct arrival signal represents one data subset. This subset may be subtracted from the original data to yield the remaining signal. The spatial filter can be a mix of adjacent traces, a pie-slice filter applied in the f-k domain, or any other spatial filtering technique. Figure 3A shows the original data, Figure 5A shows the wavefield separated direct arrival 74, and Figure 5B shows the residual data 80 containing the reflected arrivals. Further processing and stacking is often necessary to enhance the reflected arrivals.

## DIRECT ARRIVAL UTILIZATION

The direct arrival 74 from the drill bit 18 holds important information unavailable from surface seismic data. Propagation velocity is available from the direct arrival signal 74.

## THE DIRECT ARRIVAL FOR PROPAGATION VELOCITY DETERMINATION

The travel-time for energy from a given drill bit depth to reach the earth's surface via a direct path divided into the distance from the bit to the surface location is equal to the average velocity for that distance. The travel-time difference from two different drill bit depths divided into the differential distance is equal to the interval velocity between these two drill bit depths (the travel-path from the drill bit 18 to the earth's surface may be complicated somewhat by refraction of waves at interfaces, but if the arrivals are near vertical, this effect will be small). The average velocity allows two-way travel-times of near horizontal events on surface seismic data to be converted to subsurface depth. Knowledge of reflector depths provides information which can aid both the explorationist and the driller in many ways. For example, with a knowledge of the depth to a target horizon, a better forecast of drilling time and expenditures can be made. Knowledge of depths of overpressured zones can be of crucial importance during drilling.

Interval velocities can be used to identify stratigraphic units. They are also used in imaging techniques that require an accurate knowledge of wave propagation in the earth.

## IMAGING USING DRILL BIT GENERATED DIRECT AND REFLECTED SIGNALS

Imaging using the drill bit source differs from conventional surface seismic imaging because one leg of the travel-path of the reflected arrival is significantly shorter than the other. This phenomena is also the reason for the improved lateral resolution using a downhole source closer to reflecting horizons of interest. In surface seismic data, both legs of the travel-path are approximately the same. Conventional CDP stacking algorithms exploit this geometry by grouping all data that is equidistant between source and receiver and naming that point a common depth or common reflection point, as described in Mayne et al., U.S. Patent No. 2,732,906. This approximation is accurate for a flat layered earth.

With a drill bit signal, different source 18 and receiver 20 pairs have a common reflection point 82 that is no longer halfway between source 18 and receiver, as shown in Figure 6. This means that the transformation is arrival time dependent. Different reflections from the same source receiver pairs will have different Common Reflection Points. Cross-correlations from selected drill bit depths and surface geophone locations are associated with arrival times from common reflection point focus depths. The arrival times are calculated by raytracing from source to reflector to receiver through a given velocity model, Cross-correlations from each focus depth are then time shifted (to account for delay differences) and summed. The Common Reflection Point transformation is described in terms of a VSP geometry by Wyatt, K.D. and Wyatt, S.B., THE DETERMINATION OF SUBSURFACE STRUCTURAL INFORMATION USING THE VERTICAL SEISMIC PROFILE, Technical Paper No. 55.2, 51st Annual Meeting of SEG, pp. 1915-1949. Figure 7 shows an example of a transformation of the drill bit generated reflection data to Common Reflection Point 84. The transformation assumed a horizontally stratified earth. Reflecting layers are clearly imaged using the drill bit signal.

By including refraction of waves at interfaces, dipping reflectors, and raytracing, the transformation becomes more than a "CDP stack", it becomes a ray-theoretically correct imaging technique.

It is very important in common reflection point imaging that the velocity function of the region be accurately known. This is sometimes termed the "chicken and the egg" constraint on imaging of surface seismic reflection data. To image the data correctly, the velocity function in the earth must be accurately known, but to determine the velocity function it is usually necessary to have an imaged seismic data set. Fortunately, our data circumvents this problem with the interval velocities obtained from the direct arrival.

With conventional surface seismic, the seismic interval velocities are derived indirectly through either external information (e.g., sonic logs, or checkshot information nearby), or through velocity analysis of the acquired data. With the drill bit signal, interval velocities can be directly determined through the correlation time delay of the direct arrival signal. This yields accurate velocities above the drill bit depth. Below this depth extrapolation of other information or velocity analysis must be used as in surface seismic data.

It should now be readily apparent to those skilled in the art that a novel apparatus and method for providing information while drilling on subterranean geologic formations capable of achieving the stated objects of the invention has been provided. The apparatus and method make improved use of a reference signal to provide the desired information. Improved signal processing of the seismic wave signals is made possible by the reference signal. All of the seismic wave signals used to obtain the desired information originate at the drill bit. The apparatus and method is non-invasive and generates the signals used to obtain the desired information while drilling. The apparatus and method provides real time subsurface images.

It should further be apparent to those skilled in the art that various changes in form and details of the invention as shown and described may be made. It is intended that such changes be included within the scope of the claims appended hereto.

**Claims**

1. An apparatus for providing while drilling information on a subterranean geologic formation, which comprises a drilling rig (12), a rotary drill bit (18) attached to said drilling rig for providing seismic waves as it drills in the earth (16), at least one seismic wave sensor (20) spaced from said rotary drill bit in the earth for receiving in both direct seismic wave paths (26) and seismic wave paths (30) reflected from the subterranean geologic formation the seismic waves provided by said drill bit, a reference sensor (24) located on or proximate to said drilling rig, and means (31) to receive the reference signal (25) from said reference sensor and the drill bit generated signals (27) from said at least one seismic wave sensor to distinguish the drill bit generated signals from interference signals by cross-correlating the reference and seismic wave sensor signals, characterised in that means (29) are provided to receive the reference signals for deconvolving the reference signals.

2. Apparatus as claimed in Claim 1, characterised in that means (37) are provided connected to receive the cross-correlated reference and seismic wave sensor signals for eliminating rig generated energy from the reference signals.

3. Apparatus as claimed in Claim 2, characterised in that means (39) are provided to receive the cross-correlated reference and seismic sensor signals for separating the seismic wave sensor signals into a first group (41) of the seismic wave sensor signals representing the drill bit generated seismic waves received by the said at least one seismic wave sensor in the direct seismic wave paths, and a second group (43) of the seismic wave sensor signals representing the drill bit generated seismic waves received by the at least one seismic wave sensor in the seismic wave paths reflected by the subterranean geologic formation.

4. Apparatus as claimed in Claim 3, characterised in that means (46) are provided to receive the first group of the seismic wave sensor signals to derive a deconvolution operator, means (48) are provided to receive said second group of seismic wave sensor signals and connected to said deconvolution operator deriving means to deconvolve the second group of the seismic wave sensor signals and means (50) are provided connected to the deconvolved second group of the seismic wave sensor signals to form a common reflection point image while said drill bit is drilling.

5. Apparatus as claimed in any of Claims 1 to 4, characterised in that said at least one seismic wave sensor (20) comprises a plurality of sensors located proximate to a surface of the earth.

6. Apparatus as claimed in any of Claims 1 to 5, characterised in that said reference signal deconvolving means (29) is configured to provide

an approximation to an inverse of the reference signals reversed in time.

**7.** An apparatus as claimed in any of the preceding claims, characterised in that means (37) are provided connected to the cross-correlated reference signals and seismic wave sensor signals for attenuating interference signals generated by said drilling rig from the seismic wave sensor signals based on moveout differences between the interference signals and the drill bit generated seismic wave sensor signals.

**8.** Apparatus as claimed in Claim 7, characterised in that said interference signal attenuating means (37) is configured to attenuate the interference signals by time shifting the interference signals so that they have zero moveout, averaging a series of the cross-correlations together and subtracting the averaged cross-correlation from the cross-correlated reference signals and seismic wave sensor signals.

**9.** Apparatus as claimed in any of Claims 1 to 6, characterised in that said at least one seismic wave sensor comprises an array of seismic wave sensors (20), said apparatus additionally comprising means (37) connected to the seismic wave sensors for attenuating interference signals generated by said drilling rig from the seismic wave sensor signals by combining signals of the sensor array to attenuate lower apparent velocity signals radiated by said drilling rig.

**10.** Apparatus as claimed in Claim 9, characterised in that said interference signal attenuating means (37) comprises a spatial filter configured to transform cross-correlated signals from a given group of said seismic wave sensor array and from a series of drilling depths to a domain of frequency-wavenumber with a two-dimensional Fourier transform and then separate the interference signals from the seismic wave sensor signals on the basis of apparent velocity in the form of slope in the frequency-wavenumber domain.

**11.** Apparatus as claimed in any of Claims 1 to 6, characterised in that means (37) are provided connected to the cross-correlated signals from the reference signals and seismic wave sensor signals for attenuating interference signals generated by said drilling rig from the seismic wave sensor signals by combining a subset of the cross-correlated signals from a selected drilling depth to attenuate lower apparent velocity signals radiated by the drilling rig.

**12.** Apparatus as claimed in any of the preceding claims, characterised in that means (33) are provided for converting the reference signals to signals corresponding to the seismic waves generated by said drill bit by time shifting the reference signals.

**13.** Apparatus as claimed in Claim 12, characterised in that said reference signal converting means (33) is connected to time shift the reference signals after cross-correlation of the reference signals and the seismic wave sensor signals.

**14.** Apparatus as claimed in Claim 13, characterised in that means are provided connected to the cross-correlated and time-shifted signals for determining interval velocities based on travel-time difference from two different drill bit depths divided into differential path length from said drill bit to said at least one seismic wave sensor.

**15.** Apparatus as claimed in Claim 13, characterised in that means (50) are provided connected to the cross-correlated and time-shifted signals for providing a common reflection point image of the subterranean geologic formation below a shallowest drill bit depth.

**16.** Apparatus as claimed in Claim 4, characterised in that said means (39) for separating the cross-correlated reference and seismic wave sensor signals into the first and second groups is configured to separate the seismic wave sensor signals into the first and second groups on the basis of moveout differences between the first and second groups.

**17.** Apparatus as claimed in Claim 16, characterised in that said at least one seismic wave sensor (20) comprises an array of seismic sensors and said interference signal attenuating means (37) comprises a spatial filter configured to transform cross-correlated signals from a given group of said seismic wave sensor array and from a series of drilling depths to a domain of frequency-wavenumber with a two-dimensional Fourier transform and then separate the interference signals from the seismic wave sensor signals on the basis of apparent velocity in the form of a slope in the frequency-wavenumber domain.

**18.** Apparatus as claimed in Claim 16, characterised in that said interference signal attenuating means (37) is configured to attenuate the interference signals by time shifting the interference signals so that they have zero moveout, averaging a series of the cross-correlations together and subtracting the averaged cross-correlation from the cross-correlated reference signals and seismic wave sensor signals.

**19.** Apparatus as claimed in any of the preceding claims, characterised in that said reference sensor (24) comprises an accelerometer located on a swivel of said drilling rig.

**20.** Apparatus as claimed in Claim 19, characterised in that said drilling rig (12) generates incoherent signals which are attenuated in the cross-correlation.

**21.** Apparatus as claimed in any of Claims 1 to 20, characterised in that said drilling rig (12) is located on an offshore platform.

**22.** A method for providing information on a subterranean geologic formation, which comprises providing seismic waves with a rotary drilling bit (18) while drilling in the earth with the rotary drilling bit, receiving in direct seismic wave paths (26) and seismic wave paths (30) reflected from the subterranean geologic formation the seismic waves provided by the drill bit at a location in the earth spaced from the rotary drilling bit, receiving the seismic waves proximate to a drilling rig (12) connected to the rotary drilling bit, cross-correlating (31) the seismic signals sensed proximate to the drilling rig and spaced from the drilling rig to separate the drill bit generated signals from interference signals by combining the reference signals (25) and the signals (27) received spaced from the drilling rig, and separating the cross-correlated reference signals and the signals received spaced from the drilling rig into a first group (41) of the drill bit generated seismic signals travelling to the at least one location spaced from the drilling rig in direct paths and a second group (43) of the drill bit generated seismic signals travelling to the at least one location spaced from the drilling rig in paths reflected from the subterranean geologic formation; characterised in that the method includes the step (29) of deconvolving the reference signals.

**23.** The method of Claim 22, characterised in that the direct and reflected seismic waves are received by a plurality of sensors (20) located proximate to a surface of the earth.

**24.** The method of Claim 22 or Claim 23, characterised in that the direct and reflected seismic waves are received by a sensor (20) positioned in a borehole spaced from said rotary drill bit.

**25.** The method of any of Claims 22 to 24, characterised in that the reference signal deconvolving step (29) provides an approximation to an inverse of the reference signals reversed in time.

**26.** The method of any of Claims 22 to 25 additionally comprising the step (33) of converting the reference signals to signals corresponding to the seismic waves generated by the drill bit by time shifting the reference signals.

**27.** The method of Claim 26, characterised in that the reference signals are time shifted after cross-correlation of the reference signals and the seismic wave sensor signals.

**28.** The method of any of Claims 22 to 27, characterised in that the seismic wave sensor signals are separated into the first and second groups on the basis of moveout differences between the first and second groups.

**29.** The method of any of Claims 22 to 28, characterised in that the method includes the step of attenuating interference signals generated by said drilling rig from the seismic wave sensor signals based on moveout differences between the interference signals and the drill bit generated seismic wave sensor signals.

**Patentansprüche**

**1.** Vorrichtung zur Bereitstellung von Informationen über eine unterirdische geologische Formation während eines Bohrvorgangs, mit einem Bohrturm (12), mit einem an dem Bohrturm angebrachten Drehbohrer (18), der seismische Wellen erzeugt, wenn er in die Erde (16) bohrt, mit wenigstens einem Sensor (20) für seismische Wellen, der im Abstand zum Drehbohrer in der Erde angeordnet ist, um die durch den Bohrer erzeugten seismischen Wellen sowohl in direkten seismische Wellenbahnen (26) als auch in von der unterirdischen geologischen Formation reflektierten seismische Wellenbahnen (30) zu empfangen, mit einem Referenzsensor (24), der am oder in der Nähe des Bohrturms angeordnet ist, und mit einer Einrichtung (31) zum Empfang des Referenzsignals (25) von dem Referenzsensor und der von dem Bohrer erzeugten Signale (27) von dem Sensor für seismische Wellen, um die von dem Bohrer erzeugten Signale von

Interferenzsignalen zu unterscheiden, indem die Signale des Referenzsensors und des Sensors für seismische Wellen kreuzkorreliert werden, **dadurch gekennzeichnet,** daß Einrichtungen (29) vorgesehen sind, die für eine Entfaltung der Referenzsignale die Referenzsignale empfangen.

**2.** Vorrichtung nach Anspruch 1, dadurch gekennzeichnet, daß Einrichtungen (37) vorgesehen sind, die so verbunden sind, daß sie für eine Beseitigung durch den Turm erzeugter Energie aus den Referenzsignalen die kreuzkorellierten Signale des Referenzsensors und des Sensors für seismische Wellen empfangen.

**3.** Vorrichtung nach Anspruch 2, dadurch gekennzeichnet, daß Einrichtungen (39) für einen Empfang der kreuzkorrelierten Signale des Referenzsensors und des Sensors für seismische Wellen vorgesehen sind, um die Signale des Sensors für seismische Wellen in eine erste Gruppe (41) von Signalen des Sensors für seismische Wellen, die die von dem Bohrer erzeugten seismischen Wellen darstellen, die durch den Sensor für seismische Wellen in den direkten seismischen Wellenbahnen empfangen werden, und eine zweite Gruppe (43) von Signalen des Sensors für seismische Wellen trennt, die die von dem Bohrer erzeugten seismischen Wellen darstellen, die durch den Sensor für seismische Wellen in den durch die unterirdische geologische Formation reflektierten seismischen Wellenbahnen empfangen werden.

**4.** Vorrichtung nach Anspruch 3, dadurch gekennzeichnet, daß Einrichtungen (46) zum Empfang der ersten Gruppe der Signale des Sensors für seismische Wellen vorgesehen sind, um einen Entfaltungsoperator abzuleiten, daß Einrichtungen (48) zum Empfang der zweiten Gruppe der Signale des Sensors für seismische Wellen vorgesehen sind, die mit den Entfaltungsoperator-Ableitungseinrichtungen verbunden sind, um die zweite Gruppe der Signale des Sensors für seismische Wellen zu entfalten, und daß Einrichtungen (50) vorgesehen sind, die mit der entfalteten zweiten Gruppe der Signale des Sensors für seismische Wellen verbunden sind, um eine gemeinsame Reflexionspunktabbildung zu bilden, während der Bohrer bohrt.

**5.** Vorrichtung nach einem der Ansprüche 1 bis 4, dadurch gekennzeichnet, daß der Sensor (20) für seismische Wellen eine Vielzahl von Sensoren umfaßt, die in der Nähe der Erdoberfläche angeordnet sind.

**6.** Vorrichtung nach einem der Ansprüche 1 bis 5, dadurch gekennzeichnet, daß die Einrichtung (29) zur Entfaltung des Referenzsignals so ausgebildet ist, daß sie eine Annäherung an eine Umkehrung der Referenzsignale schafft, die zeitlich umgekehrt werden.

**7.** Vorrichtung nach einem der vorhergehenden Ansprüche, dadurch gekennzeichnet, daß Einrichtungen (37) vorgesehen sind, die mit den kreuzkorellierten Referenzsignalen und den Signalen des Sensors für seismische Wellen verbunden sind, um Interferenzsignale, die durch den Bohrturm aus den Signalen des Sensors für seismische Wellen erzeugt werden, auf der Grundlage von Moveout-Unterschieden zwischen den Interferenzsignalen und den Signalen von Sensoren für seismische Wellen, die durch den Bohrer erzeugt werden, zu dämpfen.

**8.** Vorrichtung nach Anspruch 7, dadurch gekennzeichnet, daß die Einrichtung zur Dämpfung der Interferenzsignale so ausgebildet ist, daß sie die Interferenzsignale dämpft, indem sie die Interferenzsignale zeitlich so versohiebt, daß sie einen Null-Moveout haben, aus einer Reihe von Kreuzkorrelationen einen Durchschnitt ermittelt und die durchschnittliche Kreuzkorrelation von den kreuzkorrelierten Referenzsignalen und den Signalen des Sensors für seismische Wellen abzieht.

**9.** Vorrichtung nach einem der Ansprüche 1 bis 6, dadurch gekennzeichnet, daß der Sensor für seismische Wellen eine Anordnung von Sensoren (20) für seismische Wellen umfaßt, wobei die Vorrichtung zusätzlich Einrichtungen (37) aufweist, die mit den Sensoren für seismische Wellen verbunden sind, um die Interferenzsignale, die von dem Bohrturm aus den Signalen der Sensoren für seismische Wellen erzeugt werden, zu dämpfen, indem Signale der Sensoranordnung kombiniert werden, damit niedrigere Scheingeschwindigkeitssignale, die von dem Bohrturm ausgestrahlt werden, gedämpft werden.

**10.** Vorrichtung nach Anspruch 9, dadurch gekennzeichnet, daß die Einrichtung (37) zur Dämpfung der Interferenzsignale einen Raumfilter umfaßt, der so ausgebildet ist, daß er die kreuzkorrelierten Signale aus einer vorgegebenen Gruppe der Sensoranordnung für seismische Wellen und aus einer Reihe von Bohrtiefen in einen Frequenz-Wellenzahl-Bereich mit

einer zweidimensionalen Fourier-Transformation transformiert und dann die Interferenzsignale von den Signalen der Sensoren für seismische Wellen auf der Grundlage einer Scheingeschwindigkeit in Form einer Änderung im Frequenz-Wellenzahl-Bereich trennt.

**11.** Vorrichtung nach einem der Ansprüche 1 bis 6, dadurch gekennzeichnet, daß Einrichtungen (37) vorgesehen sind, die mit den kreuzkorrelierten Signalen aus den Referenzsignalen und den Signalen des Sensors für seismische Wellen verbunden sind, um Interferenzsignale, die aus den Signalen des Sensors für seismische Wellen durch den Bohrturm erzeugt werden, zu dämpfen, indem eine Teilmenge der kreuzkorrelierten Signale aus einer gewählten Bohrtiefe kombiniert wird, um niedrige Scheingeschwindigkeitssignale zu dämpfen, die von dem Bohrturm ausgestrahlt werden.

**12.** Vorrichtung nach einem der vorhergehenden Ansprüche, dadurch gekennzeichnet, daß Einrichtungen (33) vorgesehen sind, um die Referenzsignale in Signale zu konvertieren, die den seismischen Wellen entsprechen, die durch den Bohrer erzeugt werden, indem die Referenzsignale zeitlich verschoben werden.

**13.** Vorrichtung nach Anspruch 12, dadurch gekennzeichnet, daß die Einrichtung (33) zur Konvertierung der Referenzsignale mit einer zeitlichen Verschiebung der Referenzsignale nach einer Kreuzkorrelation der Referenzsignale und der Signale von Sensoren für seismische Wellen verbunden ist.

**14.** Vorrichtung nach Anspruch 13, dadurch gekennzeichnet, daß Einrichtungen vorgesehen sind, die mit den kreuzkorrelierten und zeitverschobenen Signalen für eine Bestimmung von Intervallgeschwindigkeiten auf der Grundlage eines Laufzeitunterschiedes in zwei verschiedenen Bohrertiefen, die in differentielle Wegstrecken des Bohrers geteilt sind, zu dem Sensor für seismische Wellen verbunden sind.

**15.** Vorrichtung nach Anspruch 13, dadurch gekennzeichnet, daß Einrichtungen (50) vorgesehen sind, die mit den kreuzkorrelierten und zeitverschobenen Signalen verbunden sind, um eine gemeinsame Reflexionspunktabbildung der unterirdischen geologischen Formation unterhalb einer niedrigsten Bohrtiefe zu schaffen.

**16.** Vorrichtung nach Anspruch 4, dadurch gekennzeichnet, daß die Einrichtung (39) für eine Trennung der kreuzkorrelierten Referenzsignale und der Signale des Sensors für seismische Wellen in die erste und zweite Gruppe so ausgebildet ist, daß sie die Signale der Sensoren für seismische Wellen auf der Grundlage der Moveout-Unterschiede zwischen der ersten und zweiton Gruppe in die erste und zweite Gruppe trennt.

**17.** Vorrichtung nach Anspruch 16, dadurch gekennzeichnet, daß der Sensor (20) für seismische Wellen eine Anordnung von seismischen Sensoren umfaßt, und daß die Einrichtung zur Dämpfung von Interferenzsignalen einen Raumfilter umfaßt, der so ausgebildet ist, daß er kreuzkorrelierte Signale aus einer vorgegebenen Gruppe der Sensoranordnung für seismische Wellen und aus einer Reihe von Bohrtiefen in einen Frequenz-Wellenzahl-Bereich mit zweidimensionaler Fourier-Transformation transformiert und dann die Interferenzsignale von den Signalen der Sensoren für seismische Wellen auf der Grundlage einer Scheingeschwindigkeit in Form einer Änderung des Frequenz-Wellenzahl-Bereiches trennt.

**18.** Vorrichtung nach Anspruch 16, dadurch gekennzeichnet, daß die Einrichtung (37) zur Dämpfung der Interferenzsignale so ausgebildet ist, daß sie die Interferenzsignale dämpft, indem die Interferenzsignale zeitlich so verschoben werden, daß sie einen Null-Moveout haben, den Durchschnitt einer Reihe von Kreuzkorrelationen nimmt und die durchschnittliche Kreuzkorrelation von den kreuzkorrelierten Referenzsignalen und den Signalen des Sensors für seismische Wellen abzieht.

**19.** Vorrichtung nach einem der vorhergehenden Ansprüche, dadurch gekennzeichnet, daß der Referenzsensor (24) einen Beschleunigungsmesser aufweist, der auf einem Drehkopf des Bohrturms angeordnet ist.

**20.** Vorrichtung nach Anspruch 19, dadurch gekennzeichnet, daß der Bohrturm (12) inkohärente Signale erzeugt, die bei der kreuzkorrelation gedämpft werden.

**21.** Vorrichtung nach einem der Ansprüche 1 bis 20, dadurch gekennzeichnet, daß der Bohrturm (12) auf einer Offshore-Plattform angeordnet ist.

**22.** Verfahren zur Bereitstellung von Informationen über eine unterirdische geologische Formation, bei dem seismische Wellen mit einem Drehbohrer (18) während des Bohrens mit dem Drehbohrer in die Erde erzeugt werden, bei

dem die von dem Bohrer erzeugten seismischen Wellen an einer Stelle in der Erde im Abstand von dem Drehbohrer in direkten seismische Wellenbahnen (26) und in Wellenbahnen (30), die von der unterirdischen geologischen Formation reflektiert werden, empfangen werden, bei dem die seismischen Wellen in der Nähe eines mit dem Drehbohrer verbundenen Bohrturms (12) empfangen werden, bei dem die in der Nähe des Bohrturms und die im Abstand zum Bohrturm gemessenen seismischen Signale kreuzkorreliert (31) werden, um die von dem Drehbohrer erzeugten Signale von Interferenzsignalen zu trennen, indem die Referenzsignale (25) und die im Abstand zum Bohrturm empfangenen Signale (27) kombiniert werden, und bei dem die kreuzkorrelierten Referenzsignale und die Signale, die im Abstand zum Bohrturm empfangen werden, in eine erste Gruppe (41) der von dem Bohrer erzeugten seismischen Signale, die zu der wenigstens einen Stelle im Abstand zum Bohrturm in direkten Bahnen laufen, und in eine zweite Gruppe (43) der von dem Bohrer erzeugten seismischen Signale getrennt werden, die zu der wenigstens einen Stelle im Abstand zum Bohrturm in Bahnen laufen, die von der unterirdischen geologischen Formation reflektiert werden, **dadurch gekennzeichnet,** daß das Verfahren den Schritt (29) der Entfaltung der Referenzsignale enthält.

**23.** Verfahren nach Anspruch 22, dadurch gekennzeichnet, daß die direkten und reflektierten seismischen Wellen von einer Vielzahl von Sensoren (20) empfangen werden, die in der Nähe der Erdoberfläche angeordnet sind.

**24.** Verfahren nach Anspruch 22 oder 23, dadurch gekennzeichnet, daß die direkten und reflektierten seismischen Wellen von einem Sensor (20) empfangen werden, der in einem Bohrloch angeordnet ist, das sich im Abstand zu dem Drehbohrer befindet.

**25.** Verfahren nach einem der Ansprüche 22 bis 24, dadurch gekennzeichnet, daß der Schritt (29) zur Entfaltung des Referenzsignale eine Annäherung an eine Umkehrung der zeitlich umgekehrten Referenzsignale vorsieht.

**26.** Verfahren nach einem der Ansprüche 22 bis 25, das zusätzlich den Schritt (33) des Konvertierens des Referenzsignals in Signale umfaßt, die den seismischen Wellen entsprechen, die durch den Bohrer erzeugt werden, indem die Referenzsignale zeitlich verschoben werden.

**27.** Verfahren nach Anspruch 26, dadurch gekennzeichnet, daß die Referenzsignale nach der Kreuzkorrelation der Referenzsignale und der Signale der Sensoren für seismische Wellen zeitlich verschoben werden.

**28.** Verfahren nach einem der Ansprüche 22 bis 27, dadurch gekennzeichnet, daß die Signale der Sensoren für seismische Wellen auf der Grundlage von Moveout-Unterschieden zwischen der ersten und zweiten Gruppe in die erste und die zweite Gruppe getrennt werden.

**29.** Verfahren nach einem der Ansprüche 22 bis 28, dadurch gekennzeichnet, daß das Verfahren den Schritt der Dämpfung von Interferenzsignalen, die von dem Bohrturm aus den Signalen der Sensoren für seismische Wellen erzeugt werden, auf der Grundlage von Moveout-Unterschieden zwischen den Interferenzsignalen und den Signalen der Sensoren für seismische Wellen enthält, die von dem Bohrer erzeugt werden.

## Revendications

**1.** Appareil pour produire, pendant un forage, des informations concernant une formation géologique souterraine, qui comporte une installation (12) de forage, un outil rotatif (18) de forage relié à ladite installation de forage pour produire des ondes sismiques pendant qu'il fore dans le sol (16), au moins un capteur (20) d'ondes sismiques espacé dudit outil rotatif de forage dans le sol pour recevoir à la fois en trajectoires d'ondes sismiques directes (26) et des trajectoires d'ondes sismiques (30) réfléchies par la formation géologique souterraine à partir des ondes sismiques produites par ledit outil de forage, un capteur (24) de référence placé sur ou à proximité de ladite installation de forage, et des moyens (31) destinés à recevoir le signal de référence (25) provenant dudit capteur de référence et des signaux (27) générés par l'outil de forage à partir dudit, au moins un, capteur d'ondes sismiques pour distinguer les signaux générés par l'outil de forage de signaux d'interférence par corrélation croisée des signaux des capteurs de référence et d'ondes sismiques, caractérisé en ce que des moyens (29) sont prévus pour recevoir les signaux de référence afin de soumettre à une déconvolution les signaux de référence.

**2.** Appareil selon la revendication 1, caractérisé en ce que des moyens (37) sont prévus, connectés pour recevoir les signaux des capteurs de référence et d'ondes sismiques, en

corrélation croisée, afin d'éliminer des signaux de référence l'énergie générée par l'installation.

3. Appareil selon la revendication 2, caractérisé en ce que des moyens (39) sont prévus pour recevoir les signaux des capteurs de référence sismiques, on corrélation croisée afin de séparer les signaux du capteur d'ondes sismiques en un premier groupe (41) de signaux de capteurs d'ondes sismiques représentant les ondes sismiques générées par l'outil de forage, reçues par ledit, au moins un, capteur d'ondes sismiques dans les trajectoires d'ondes sismiques directes, et un second groupe (43) de signaux de capteur d'ondes sismiques représentant les ondes sismiques générées par l'outil de forage, reçues par le ou chaque capteur d'ondes sismiques dans les trajectoires d'ondes sismiques réfléchies par la formation géologique souterraine.

4. Appareil selon la revendication 3, caractérisé en ce que des moyens (46) sont prévus pour recevoir le premier groupe de signaux de capteur d'ondes sismiques afin de dériver un opérateur de déconvolution, des moyens (48) sont prévus pour recevoir ledit second groupe de signaux de capteur d'ondes sismiques et connectés auxdits moyens dérivent un opérateur de déconvolution afin de soumettre le second groupe des signaux de capteur d'ondes sismiques à une déconvolution, et des moyens (50) sont prévus connectés au second groupe de signaux de capteur d'ondes sismiques, ayant subi une déconvolution, pour former une image commune de points de réflexion pendant que ledit outil de forage fore.

5. Appareil selon l'une quelconque des revendications 1 à 4, caractérisé on ce que ledit, au moins un, capteur (20) d'ondes sismiques comprend plusieurs capteurs placés à proximité de la surface du sol.

6. Appareil selon l'une quelconque des revendications 1 à 5, caractérisé en ce que lesdits moyens (29) de déconvolution de signaux de référence sont configurés pour établir une approximation d'un inverse des signaux de référence inversés dans le temps.

7. Appareil selon l'une quelconque des revendications précédentes, caractérisé en ce que des moyens (37) sont prévus, connectés aux signaux de référence et aux signaux de capteur d'ondes sismiques en corrélation croisée pour atténuer les signaux d'interférence générés par ladite installation de forage par rapport aux signaux des capteurs d'ondes sismiques sur la base de différences de sortie entre les signaux d'interférence et les signaux des capteurs d'ondes sismiques générés par l'outil de forage.

8. Appareil selon la revendication 7, caractérisé en ce que lesdits moyens (37) d'atténuation des signaux d'interférence sont configurés de façon à atténuer les signaux d'interférence en décalant dans le temps les signaux d'interférence afin qu'ils aient une sortie nulle, en établissant la moyenne d'une série des corrélations croisées, entre elles, et en soustrayant la moyenne de la corrélation croisée des signaux de référence et des signaux des capteurs d'ondes sismiques en corrélation croisée.

9. Apppareil selon l'une quelconque des revendications 1 à 6, caractérisé en ce que ledit, au moins un, capteur d'ondes sismiques comprend une rangée de capteurs d'ondes sismiques (20), ledit appareil comportant en outre des moyens (37) connectés au capteur d'ondes sismiques pour atténuer des signaux d'interférence générés par ladite installation de forage par rapport aux signaux des capteurs d'ondes sismiques en combinant des signaux de la rangée de capteurs afin d'atténuer des signaux de vitesse apparente plus faible rayonnant de ladite installation de forage.

10. Appareil selon la revendication 9, caractérisé en ce que lesdits moyens (37) d'atténuation des signaux d'interférence comprennent un filtre spatial configuré de façon à transformer des signaux en corrélation croisée provenant d'un groupe donné de ladite rangée de capteurs d'ondes sismiques et d'une série de profondeurs de forage en un domaine de nombres d'ondes porteuses avec une transformée de Fourier à deux dimensions, puis à séparer les signaux d'interférence des signaux des capteurs d'ondes sismiques sur la base d'une vitesse apparente sous la forme d'une pente dans le domaine des nombres d'ondes porteuses.

11. Appareil selon l'une quelconque des revendications 1 à 6, caractérisé en ce que des moyens (37) sont prévus, connectés aux signaux en corrélation croisée provenant des signaux de référence et des signaux de capteurs d'ondes sismiques pour atténuer des signaux d'interférence générés par ladite installation de forage par rapport aux signaux du capteur d'ondes sismiques en combinant un

sous-ensemble des signaux en corrélation croisée provenant d'une profondeur de forage choisie afin d'atténuer des signaux de vitesse apparente plus faible rayonnant de l'installation de forage.

**12.** Appareil selon l'une quelconque des revendications précédentes, caractérisé en ce que des moyens (33) sont prévus pour convertir les signaux de référence en signaux correspondant aux ondes sismiques générées par ledit outil de forage par décalage dans le temps des signaux de référence.

**13.** Appareil selon la revendication 12, caractérisé en ce que lesdits moyens (33) de conversion des signaux de référence sont connectés de façon à décaler dans le temps les signaux de référence après corrélation croisée des signaux de référence et des signaux des capteurs d'ondes sismiques.

**14.** Appareil selon la revendication 13, caractérisé en ce que des moyens sont prévus, connectés aux signaux en corrélation croisée et décalés dans le temps, pour déterminer des vitesses d'intervalle sur la base d'une différence de temps de parcours à partir de deux profondeurs différentes de l'outil de forage, divisées en une longueur de trajectoire différentielle depuis ledit outil de forage jusqu'audit, au moins un, capteur d'ondes sismiques.

**15.** Appareil selon la revendication 13, caractérisé en ce que des moyens (50) sont prévus, connectés aux signaux en corrélation croisée et décalés dans le temps pour produire une image de points de réflexion commune de la formation géologique souterraine au-dessous de la profondeur la plus faible de l'outil de forage.

**16.** Appareil selon la revendication 4, caractérisé en ce que lesdits moyens (39) destinés à séparer les signaux de référence et des capteurs d'ondes sismiques en corrélation croisée en premier et second groupes, sont configurés de façon à séparer les signaux des capteurs d'ondes sismiques en premier et second groupes sur la base des différences de sortie entre les premier et second groupes.

**17.** Appareil selon la revendication 16, caractérisé en ce que ledit, au moins un, capteur (20) d'ondes sismiques comprend une rangée de capteurs sismiques et lesdits moyens (37) d'atténuation des signaux d'interférence comprennent un filtre spatial configuré de façon à transformer des signaux en corrélation croisée provenant d'un groupe donné de ladite rangée de capteurs d'ondes sismiques et d'une série de profondeurs de forage en un domaine de nombres d'ondes porteuses avec une transformée de Fourier à deux dimensions, puis à séparer les signaux d'interférence des signaux des capteurs d'onde sismiques sur la base d'une vitesse apparente sous la forme d'une pente dans le domaine des nombres d'ondes porteuses.

**18.** Appareil selon la revendication 16, caractérisé en ce que lesdits moyens (37) d'atténuation des signaux d'interférence sont configurés de façon à atténuer les signaux d'interférence en décalant dans le temps les signaux d'interférence afin qu'ils aient une sortie nulle, en établissant la moyenne d'une série des corrélations croisées, ensemble, et en soustrayant la moyenne des corrélations croisées des signaux de référence et des signaux des capteurs d'ondes sismiques en corrélation croisée.

**19.** Appareil selon l'une quelconque des revendications précédentes, caractérisé en ce que ledit capteur (24) de référence comprend un accéléromètre placé sur une tête de rotation de ladite installation de forage.

**20.** Appareil selon la revendication 19, caractérisé en ce que ladite installation (12) de forage génère des signaux incohérents qui sont atténués dans la corrélation croisée.

**21.** Appareil selon l'une quelconque des revendications 1 à 20, caractérisé en ce que ladite installation de forage (12) est placée sur une plate-forme en mer.

**22.** Procédé pour produire des informations portant sur une formation géologique souterraine, qui consiste à produire des ondes sismique avec un outil rotatif (18) de forage tout en forant dans le sol à l'aide de l'outil rotatif de forage, à recevoir des trajectoires d'ondes sismiques directes (26) et des trajectoires d'ondes sismiques (30) réfléchies par la formation géologique souterraine, les ondes sismiques étant produites par l'outil de forage en un emplacement dans le sol espacé de l'outil rotatif de forage, à recevoir les ondes sismiques à proximité d'une installation (12) de forage reliée à l'outil rotatif de forage, à établir une corrélation croisée (31) entre les signaux sismiques captés à proximité de l'installation de forage et la distance de l'installation de forage pour séparer les signaux générés par l'outil de

forage de signaux d'interférence en combinant les signaux de référence (25) et les signaux (27) reçus à distance de l'installation de forage, et à séparer les signaux de référence et les signaux reçus à distance de l'installation de forage, en corrélation croisée, en un premier groupe (41) des signaux sismiques générés par l'outil de forage se déplaçant jusqu'à l'emplacement ou jusqu'à chaque emplacement espacé de l'installation de forage en trajectoires directes et un second groupe (43) de signaux sismiques générés par l'outil de forage se déplaçant jusqu'à l'emplacement ou jusqu'à chaque emplacement espacé de l'installation de forage en suivant des trajectoires réfléchies par la formation géologique souterraine ; procédé caractérisé en ce qu'il comprend l'étape (29) qui consiste à soumettre les signaux de référence à une déconvolution.

**23.** Procédé selon la revendication 22, caractérisé en ce que les ondes sismiques directes et réfléchies sont reçues par plusieurs capteurs (20) placés à proximité de la surface du sol.

**24.** Procédé selon la revendication 22 ou la revendication 23, caractérisé en ce que les ondes sismiques directes et réfléchies sont reçues par un capteur (20) placé dans un trou de forage espacé dudit outil rotatif de forage.

**25.** Procédé selon l'une quelconque des revendications 22 à 24, caractérisé en ce que l'étape (29) consistant à soumettre les signaux de référence à une déconvolution produit une approximation d'un inverse des signaux de référence inversés dans le temps.

**26.** Procédé selon l'une quelconque des revendications 22 à 25, comprenant en outre l'étape (33) qui consiste à convertir les signaux de référence en signaux correspondant aux ondes sismiques générées par l'outil de forage en décalant dans le temps les signaux de référence.

**27.** Procédé selon la revendication 26, caractérisé en ce que les signaux de référence sont décalés dans le tempe après corrélation croisée des signaux de référence et des signaux des capteurs d'ondes sismiques.

**28.** Procédé selon l'une quelconque des revendications 22 à 27, caractérisé en ce que les signaux des capteurs d'ondes sismiques sont séparés en premier et second groupes sur la base des différences de sortie entre les premier et second groupes.

**29.** Procédé selon l'une quelconque des revendications 22 à 28, caractérisé en ce qu'il comprend l'étape qui consiste à atténuer des signaux d'interférence générés par ladite installation de forage par rapport aux signaux des capteurs d'ondes sismiques sur la base de différences de sortie entre les signaux d'interférence et les signaux des capteurs d'ondes sismiques, générés par l'outil de forage.

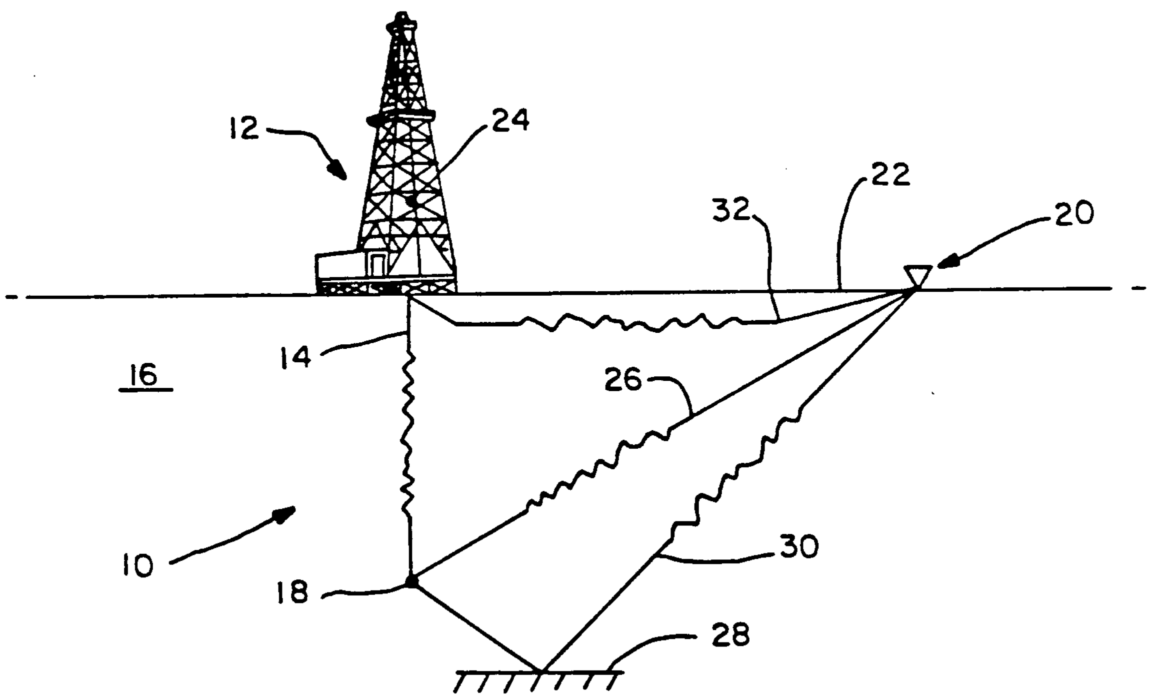


FIG.—1

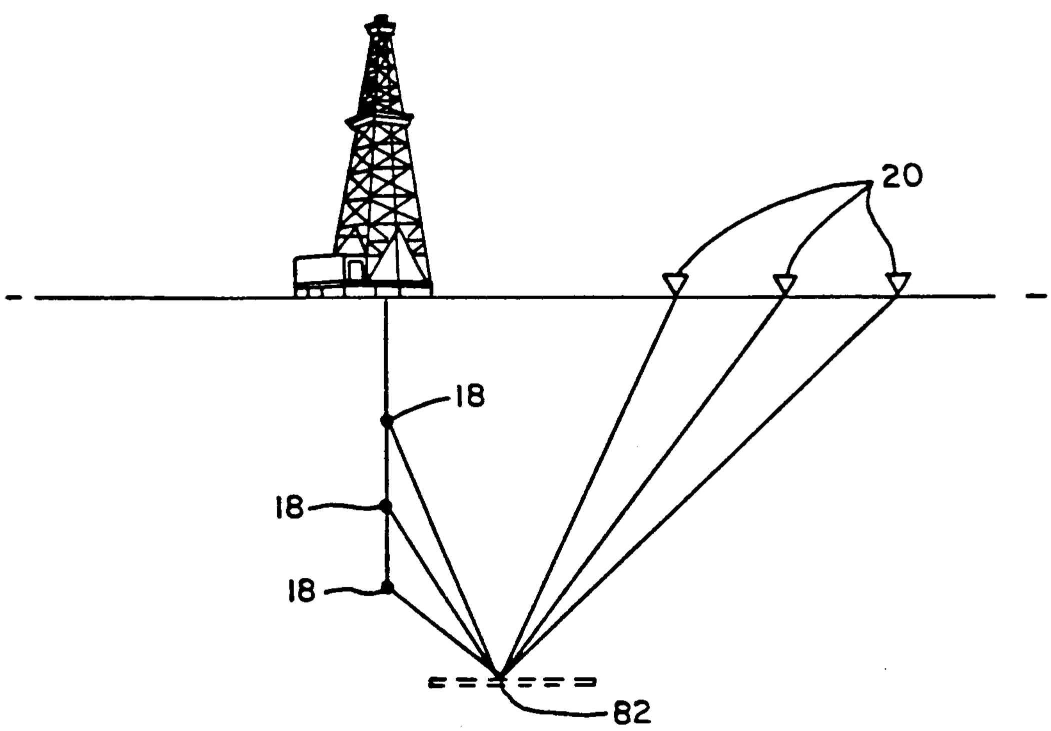


FIG.—6

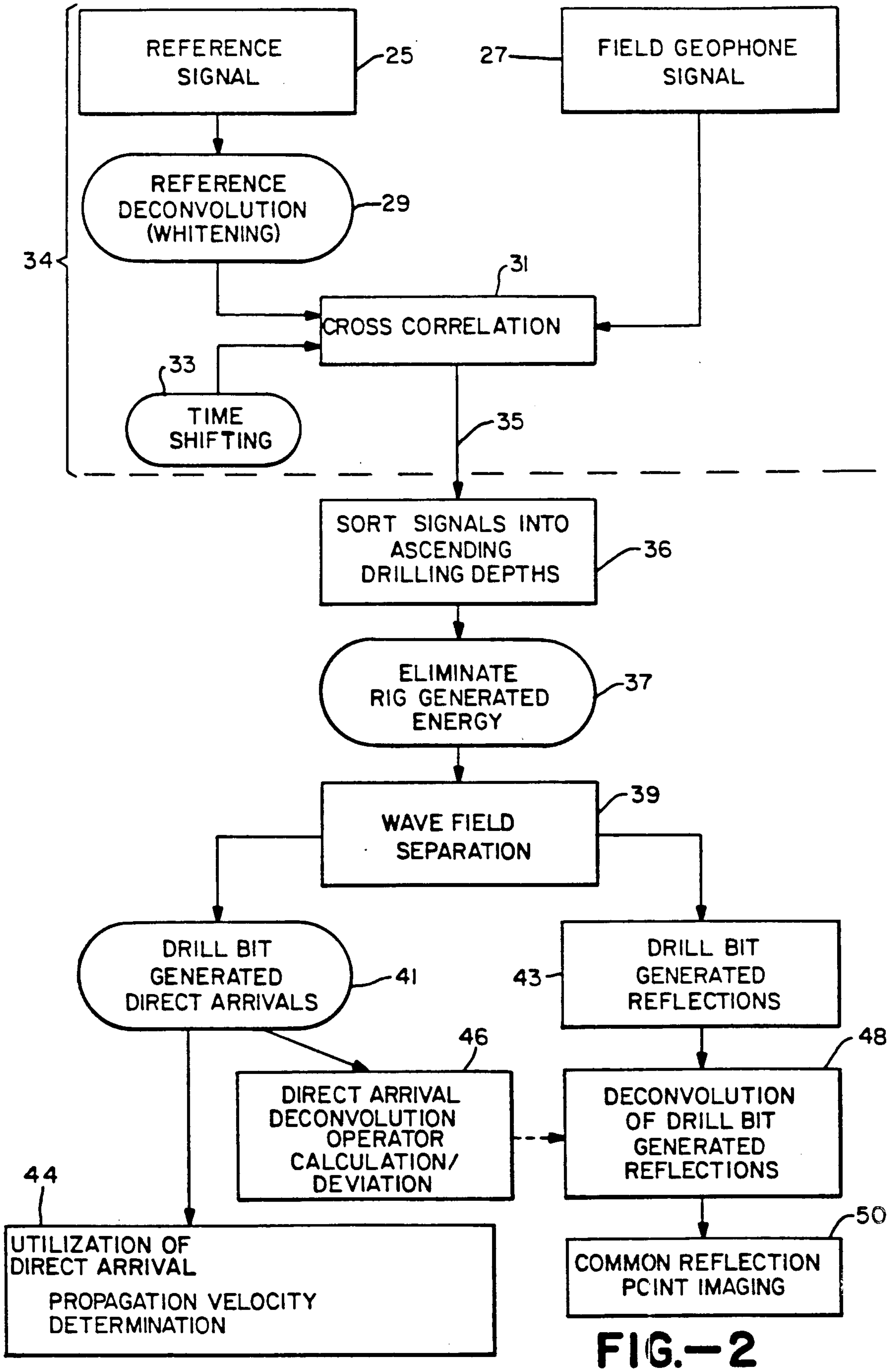
REFERENCE SIGNAL
25
27
FIELD GEOPHONE SIGNAL
REFERENCE DECONVOLUTION (WHITENING)
29
34
31
CROSS CORRELATION
33
TIME SHIFTING
35
SORT SIGNALS INTO ASCENDING DRILLING DEPTHS
36
ELIMINATE RIG GENERATED ENERGY
37
39
WAVE FIELD SEPARATION
DRILL BIT GENERATED DIRECT ARRIVALS
41
43
DRILL BIT GENERATED REFLECTIONS
46
48
DIRECT ARRIVAL DECONVOLUTION OPERATOR CALCULATION/ DEVIATION
DECONVOLUTION OF DRILL BIT GENERATED REFLECTIONS
44
50
UTILIZATION OF DIRECT ARRIVAL
PROPAGATION VELOCITY DETERMINATION
COMMON REFLECTION PCINT IMAGING

FIG.—2

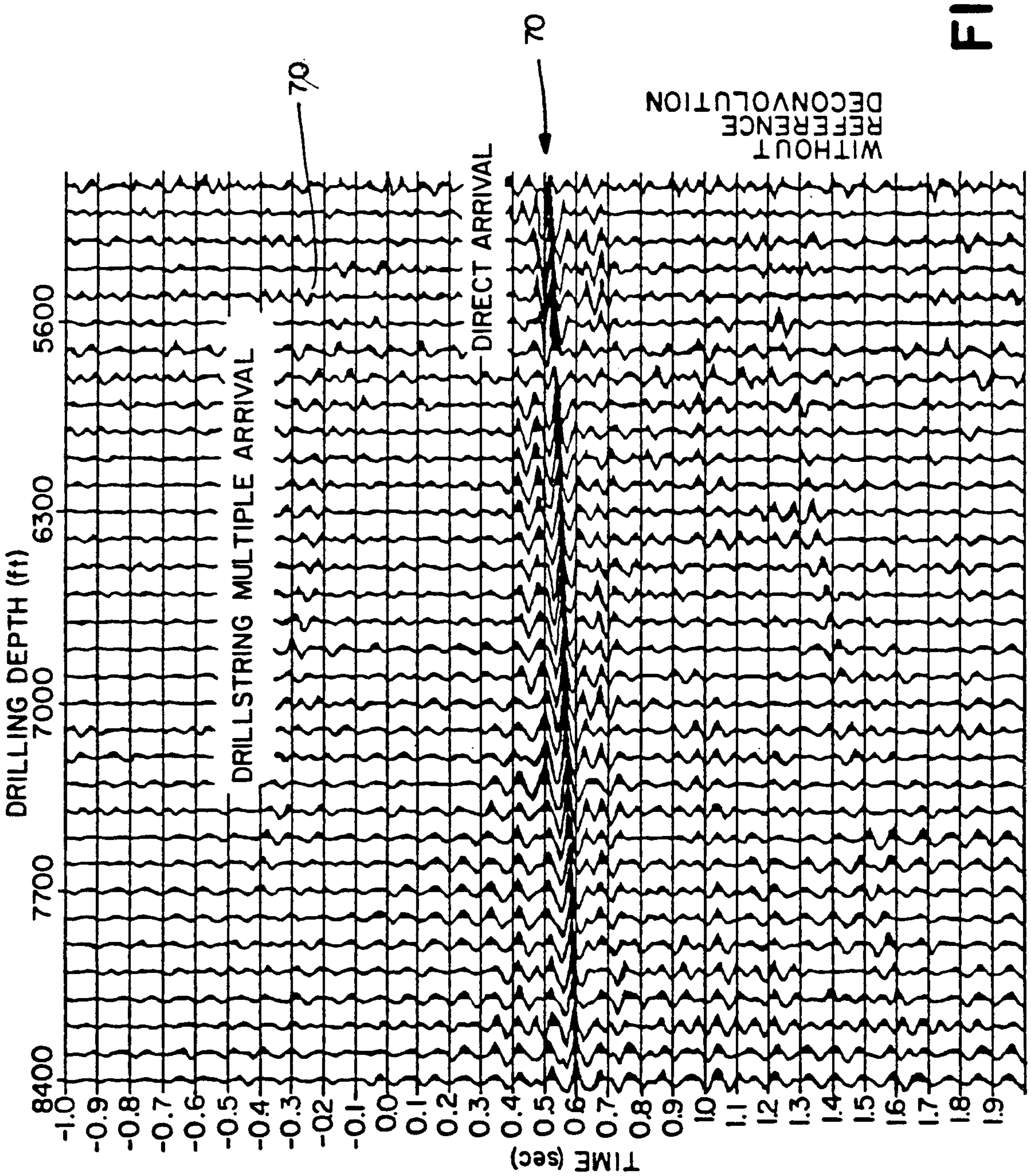
DRILLING DEPTH (ft)
5600
6300
7000
7700
8400
TIME (sec)
-1.0 -0.9 -0.8 -0.7 -0.6 -0.5 -0.4 -0.3 -0.2 -0.1 0.0 0.1 0.2 0.3 0.4 0.5 0.6 0.7 0.8 0.9 1.0 1.1 1.2 1.3 1.4 1.5 1.6 1.7 1.8 1.9
DRILLSTRING MULTIPLE ARRIVAL
DIRECT ARRIVAL
70
70
WITHOUT
REFERENCE
DECONVOLUTION

FIG.—3a

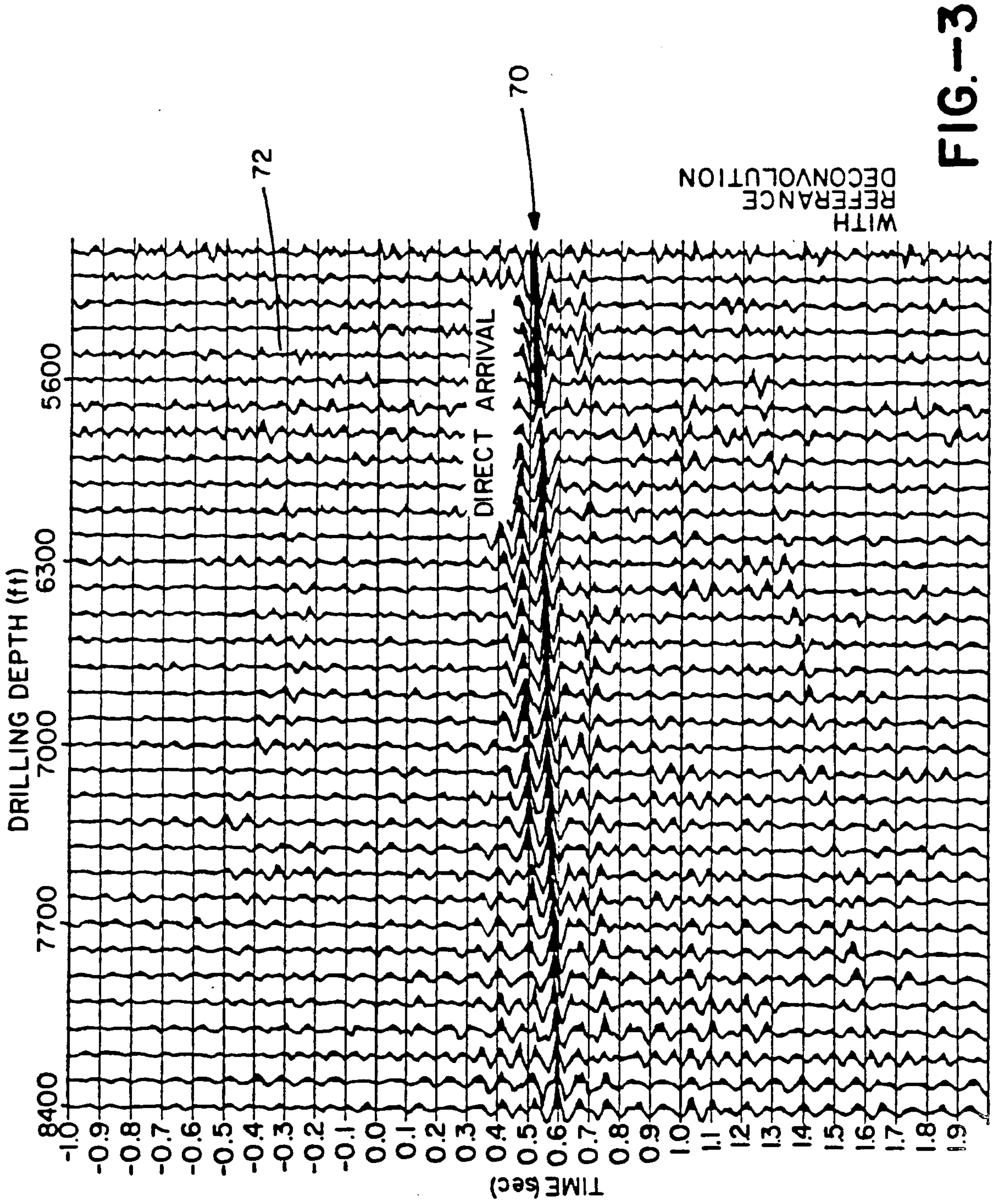
DRILLING DEPTH (ft)
5600
6300
7000
7700
8400
DIRECT ARRIVAL
72
70
WITH
REFERANCE
DECONVOLUTION
-1.0 -0.9 -0.8 -0.7 -0.6 -0.5 -0.4 -0.3 -0.2 -0.1 0.0 0.1 0.2 0.3 0.4 0.5 0.6 0.7 0.8 0.9 1.0 1.1 1.2 1.3 1.4 1.5 1.6 1.7 1.8 1.9
TIME (sec)

FIG.—3b

FIG.—4

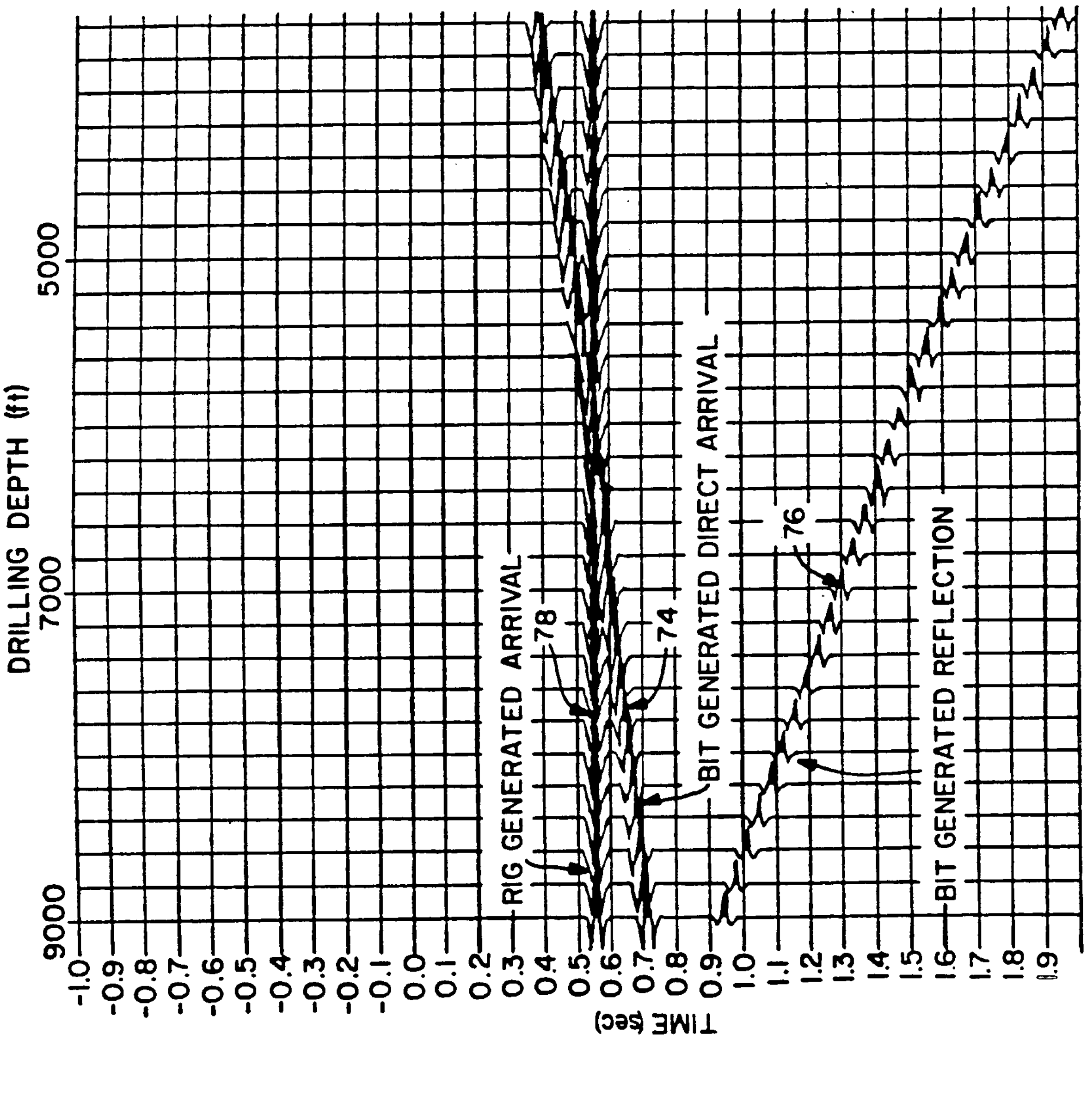
DRILLING DEPTH (ft)
5000
7000
9000
TIME (sec)
-1.0 -0.9 -0.8 -0.7 -0.6 -0.5 -0.4 -0.3 -0.2 -0.1 0.0 0.1 0.2 0.3 0.4 0.5 0.6 0.7 0.8 0.9 1.0 1.1 1.2 1.3 1.4 1.5 1.6 1.7 1.8 1.9
RIG GENERATED ARRIVAL
78
74
BIT GENERATED DIRECT ARRIVAL
76
BIT GENERATED REFLECTION

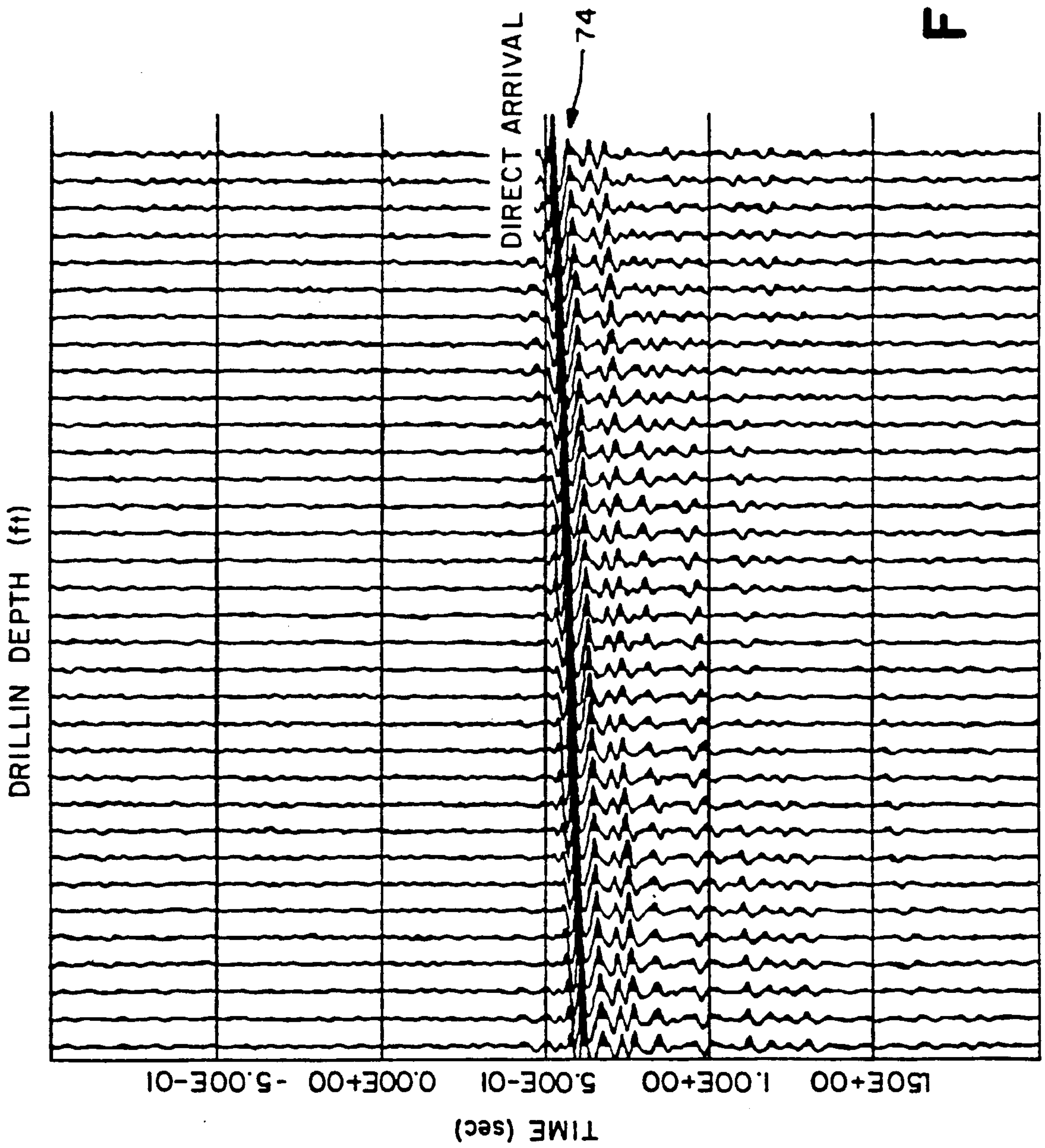
DIRECT ARRIVAL
74
DRILLIN DEPTH (ft)
TIME (sec)
-5.00E-01
0.00E+00
5.00E-01
1.00E+00
1.50E+00

FIG.—5a

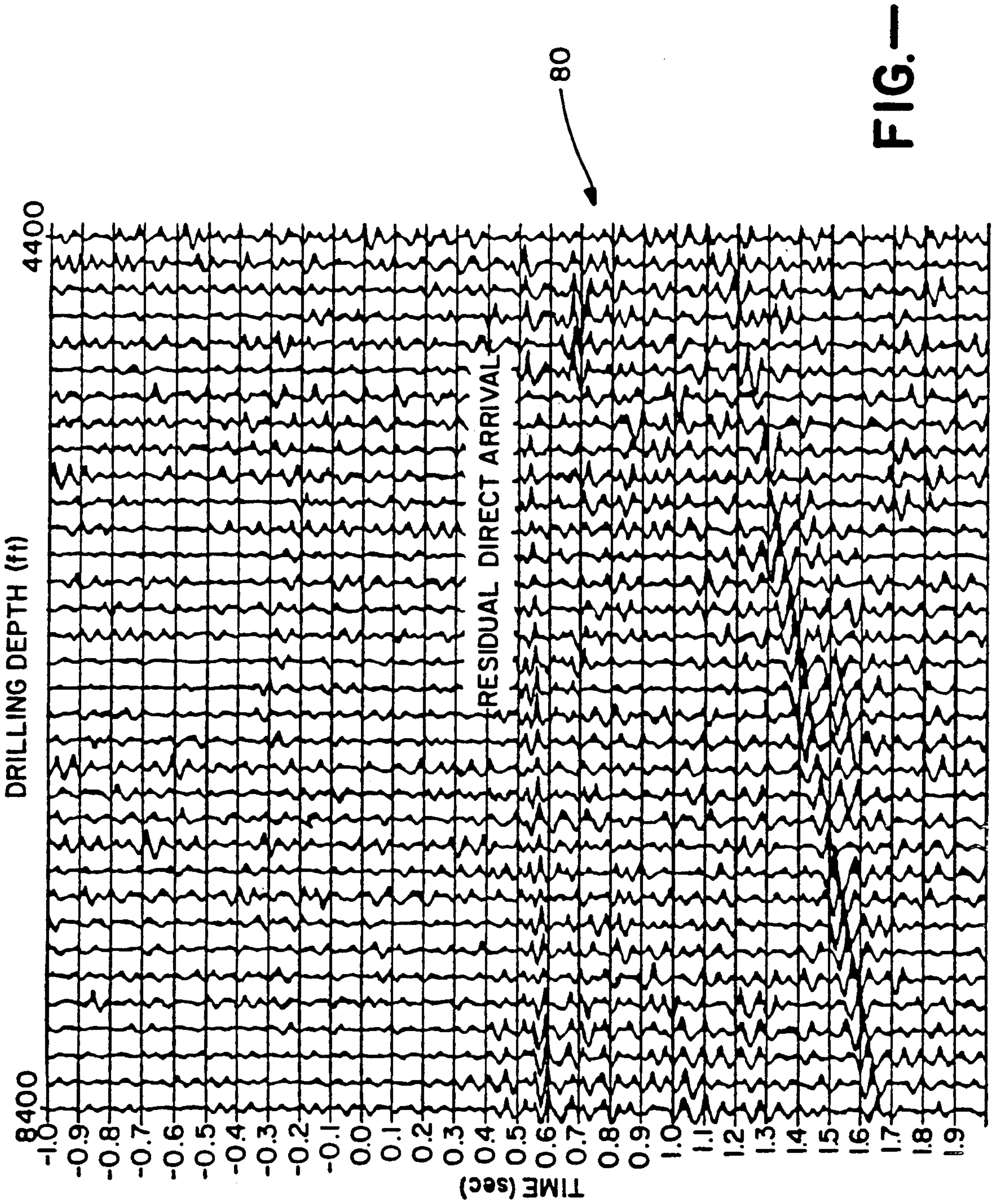
80
DRILLING DEPTH (ft)
4400
8400
RESIDUAL DIRECT ARRIVAL
TIME (sec)
-1.0 -0.9 -0.8 -0.7 -0.6 -0.5 -0.4 -0.3 -0.2 -0.1 0.0 0.1 0.2 0.3 0.4 0.5 0.6 0.7 0.8 0.9 1.0 1.1 1.2 1.3 1.4 1.5 1.6 1.7 1.8 1.9

FIG.—5b

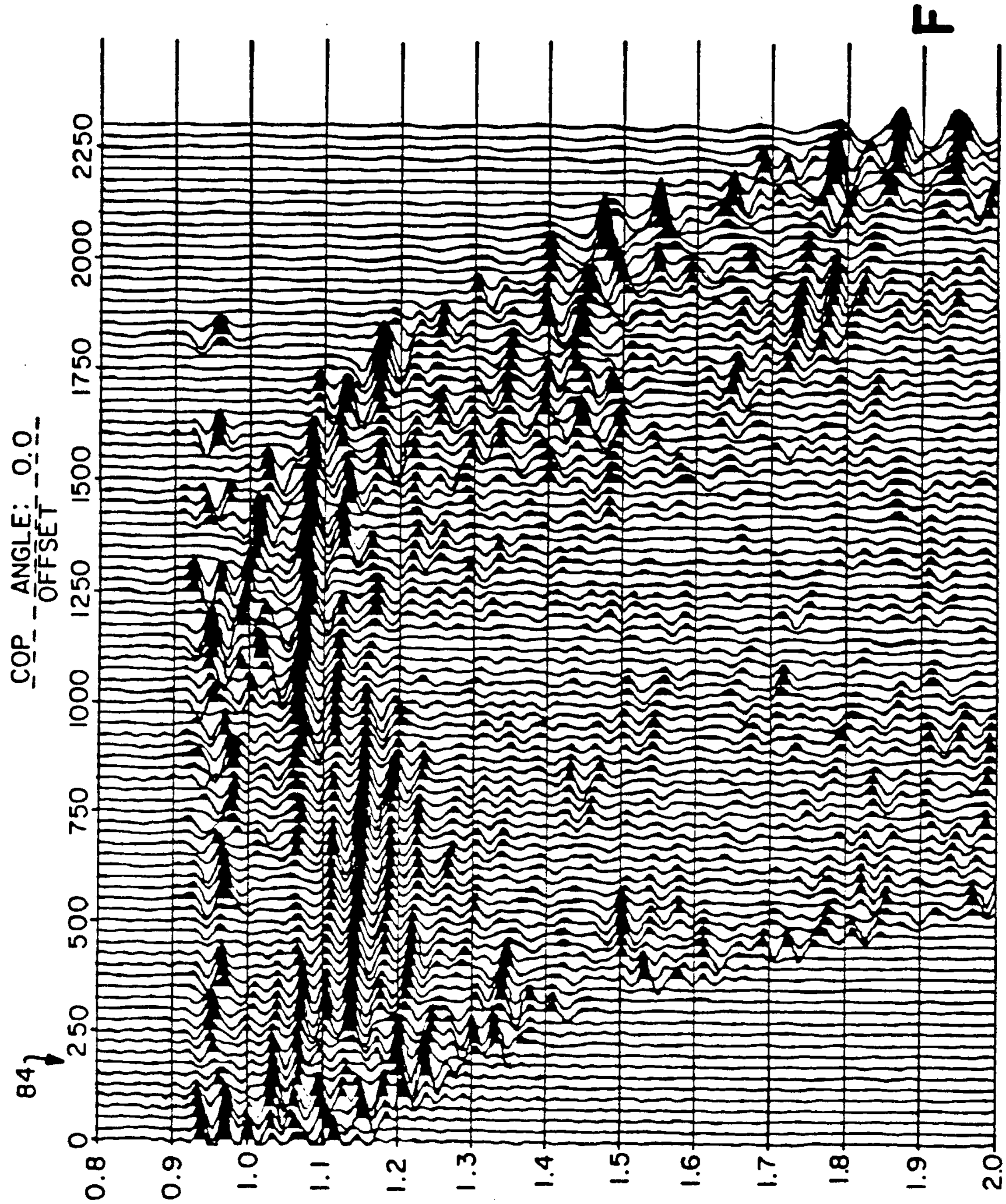
COP
ANGLE: 0.0
OFFSET
84
0
250
500
750
1000
1250
1500
1750
2000
2250
0.8
0.9
1.0
1.1
1.2
1.3
1.4
1.5
1.6
1.7
1.8
1.9
2.0

FIG.—7